# EUROPEAN PATENT APPLICATION

(11) **EP 2 181 577 A1**
(43) Date of publication of application: **05.05.2010**
(21) Application number: 09174911.9
(22) Date of filing: 03.11.2009
(51) Int. Cl.: A01D 34/84

(54) **Mobile mowing machine comprising fixed and pivoting mowing units**

(30) Priority: 04.11.2008 NL 2002166
(71) Applicant: Bart Veldhuizen B.V., 3737 BA Groenekan (NL)
(72) Inventor: Veldhuizen, Pieter Gerrit, 3737 BA, Groenekan (NL)
(74) Representative: Klavers, Cornelis

(57) **Abstract**

There is disclosed a mobile mowing machine (1) comprising one or more main mowing units (2-1,2-2) and at least one mowing unit (3-1,3-2) disposed behind the main mowing unit, seen in the driving direction, and being pivotable in a horizontal plane. Said pivoting mowing unit mows at least part of the area not mowed by said at least one main mowing unit while driving ahead, each pivoting mowing unit mowing its own area on one side of the passing obstacles. The two pivoting mowing units are mounted to respective arms (5-1,5-2), which may differ in length, resulting in overlapping mowing ranges at the location of their boundary region. In one embodiment, said at least one pivoting mowing unit is mounted on a frame (10) capable of forward and backward movement, parallel to the driving direction, on the mowing machine.

## Description

The present invention relates to a mobile mowing machine.

The present invention further relates to a method for mowing grass or weeds, for example, also around obstacles such as fences, posts, trees and shrubs, for example in road verges.

Such mowing machines are generally known. A drawback of such mowing machines is the fact that on the one hand there are special mowing machines designed solely for mowing around obstacles, and that on the other hand there are special mowing machines designed solely for mowing large areas where such obstacles are absent.

The object of the present invention is to provide a universally usable mobile mowing machine which can be used both for mowing larger swaths and areas and for mowing foliage around obstacles at a high speed.

In order to accomplish that object, the mobile mowing machine according to the invention is **characterised in that** the mowing machine, besides one or two main mowing units, comprises at least one mowing unit disposed behind the main mowing unit, seen in the driving direction, and being pivotable in a horizontal plane.

The advantage of the mowing machine according to the invention is that the main mowing unit(s), which are usually provided with blades that cover a larger mowing area, and which are primarily intended for the larger mowing swaths, mow said swaths before the pivoting mowing units, which usually cover a smaller mowing area, come into action. Since they can pivot, said mowing units on the one hand cover areas which the main mowing unit(s) do not reach, whilst on the other hand a larger mowing range is realised than could be expected on the basis of the surface area of the blades of said pivoting units. It is the pivoting mowing units' job to pivot dynamically around obstacles whilst in the meantime mowing the foliage at the foot of the obstacles. It is noted that the use of classic blades in main and/or pivoting mowing units is not required, as said mowing unit(s) may also be provided with cutting elements that operate on the basis of water jets that mow the foliage at a water pressure of, for example, 2000 bar.

When one main mowing unit and one pivoting mowing unit are coupled to the mobile mowing machine, the mowing unit, by pivoting aside, is capable of mowing close to obstacles, indentations or walls. When, for example, two main mowing units and two mowing units pivoting therebehind are used, the latter mowing units can mow along obstacles, such as posts which pass between the main mowing units. Contact could be made with the obstacles in that case, causing the pivoting mowing units to pivot aside and pass the obstacle while mowing. Sensors may furthermore be used, which sensors prevent contact as much as possible but do give commands to hydraulic, pneumatic or electric control means to pivot the pivoting mowing unit aside temporarily, possibly quickly, whilst the mowing unit passes the obstacle and mows along the foot of the obstacle. The mowing machine can advantageously move at a uniform speed in the driving direction in that case, even while passing the obstacles and mowing around said obstacles.

One embodiment of the mowing machine according to the invention is **characterised in that** at least the pivoting mowing unit(s) is (are) mounted on a frame capable of forward and backward movement, parallel to the driving direction, on the mowing machine.

The advantage of this embodiment of the mowing machine according to the invention is that while the mowing machine is driving at a uniform speed relative to the ground surface, at least the pivoting mowing units, can pivot aside, possibly together with the main mowing unit(s), during the backward movement at a temporarily lower speed relative to the ground surface, while mowing around the obstacle. In this way more time will be available both for carrying out the mechanical movement of the mowing unit(s), without sudden rapid movements or large reactive forces, and for carrying out the mowing operation at that location. When the pivoting mowing units have mowed around the obstacles, the mowing units and the frame move forward over the mowing machine in anticipation of a next obstacle, around which mowing will likewise take place by the pivoting mowing units while moving back to the rear over the mowing machine.

Another embodiment which can be readily added to existing mowing machines which are already provided with one or more main mowing units is **characterised in that** the at least one main mowing unit, which is embodied as a rotary mowing unit, is rotatable about a respective point of rotation, which point of rotation practically coincides with the point of rotation of the pivot pin about which the respective arm of the respective mowing unit pivots.

Further advantageous embodiments of the mobile mowing machine and the related method, together with the associated advantages, are described in the description below.

The mowing machine and the mowing method according to the present invention will now be explained in more detail with reference to the figures below, in which like parts are indicated by the same numerals. In the drawing:
Figure 1 is a schematic view of a possible embodiment of the mowing part of the mowing machine according to the invention;
Figure 2 is a schematic view of another possible embodiment of the mowing part of the mowing machine according to the invention;
Figure 3 shows a mowing machine according to the invention, which is provided on one side thereof with a frame for the mowing unit(s) which is movable parallel to the driving direction.

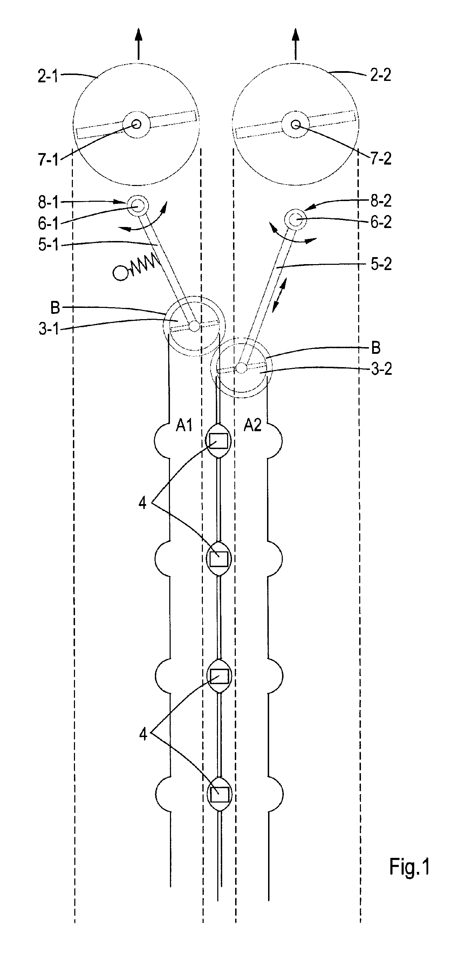

Figure 1 shows a mobile mowing machine 1, in particular the part intended for mowing, which generally comprises one or more, in this case two, main mowing units 2-1 and 2-2 and at least one, two in this case, pivoting mowing units 3-1, 3-2 disposed behind the main mowing unit, hereinafter in some cases generally indicated at 2, seen in the driving direction (upward in the figure), which can pivot at desired angular speeds, at least in a horizontal plane. The aforesaid mowing units 3 may be vertically adjustable. Another possible embodiment (not shown) of the mowing machine 1 comprises one main mowing unit 2 and one pivoting mowing unit 3 arranged therebehind. The pivoting mowing unit 3, 3-1, 3-2 simply moves aside, away from an obstacle 4, upon making contact therewith, in which case the mowing unit is pushed aside by the obstacle 4. It is advisable in that case to provide the mowing unit 3 with a spring-loaded bellows or roller at the outer circumference thereof, which may be rotatably driven in desired directions of rotation, or with an elastic material, for example a pneumatic tire B, so as to reduce the effects of the impact with the obstacle, which is fragile in some cases. Preferably, said pivoting aside of the at least one mowing unit 3 upon making contact or upon detection by means of a proximity sensor, is mechanically aided by hydraulic, pneumatic or electric means connected to the mowing unit 3, which means are generally known and which are not shown in a figure, therefore. Thus, damage to obstacles 4 or to the mowing unit(s) is prevented, whilst nevertheless mowing around the obstacle 4 can take place with sufficient precision.

The centre of the elastic material provided around the aforesaid curved outer circumference need not coincide with the centre of the rotary mowing unit. When the machine 1 moves forward, the foliage on the side of the obstacles 4 with which the elastic outer circumference makes contact will generally be mowed closer to the obstacle 4 than the foliage on the opposite side, which cannot be mowed until the pivoting mowing units have pivoted back. By the time the mowing units have pivoted back, the machine 1 will have moved further ahead in the driving direction, so that mowing will take place less thoroughly on said opposite side of the obstacle, and some foliage will remain on that side. To prevent this, it is preferable to position the centre of the aforesaid outer circumference, or of a guide wheel present thereon, slightly ahead of the centre of the rotary mowing unit.

The at least one pivoting mowing unit 3 is mounted to one end of a pivoting arm 5-1, 5-2. The arms 5 may be telescopically adjustable for length, if desired. The other end of the arm 5 is mounted for pivoting movement about a vertical pivot 6. By arranging the vertical pivot pin 6 at a slight, controllable angle in a horizontal plane, the mowing unit 3 can be moved in vertical direction and thus be lifted. In figure 1 an embodiment, to be explained hereinafter, is shown in which the points of rotation 7-1, 8-1 and 7-2, 8-2, respectively, do not engage at the same positions.

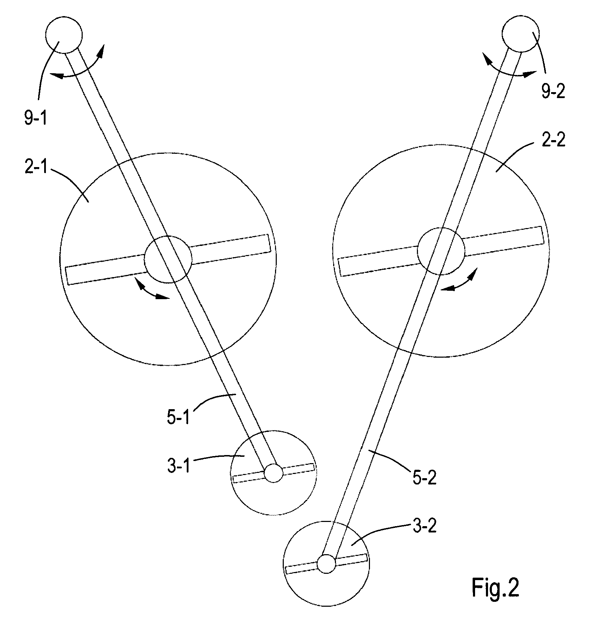

Figure 2 shows the main mowing unit 2, which is embodied as a rotary mowing unit, wherein at least the blades of said mowing unit, which may be provided with a guard arranged near the ground surface, are rotatable about a respective point of rotation 7-1, 7-2. It is preferable to have said points of rotation substantially coincide with the respective points of rotation 8-1, 8-2 of the pivot pin 6-1, 6-2 about which the arm 5-1, 5-2 in question of the respective pivoting mowing unit 3-1, 3-2 pivots, because this makes it easier to add and adapt the mowing units to existing machines. By extending the arms 5-1 and 5-2 (see figure 2), the mutual spacing and the positions both of the main mowing units 2 and of the pivoting mowing units 3, can be influenced as desired.

Figures 1 and 2 further show that the mowing machine 1 comprises pivoting mowing units (two in this case) 3-1, 3-2, which are each mounted to respective arms 5-1, 5-2, which are different in length. This achieves that a certain overlap can be realised in the mowing ranges of each of said mowing units and that there will not remain a small un-mowed part between adjacent mowing ranges, which might be the case if the pivoting mowing units were mounted to arms of equal length.

The embodiments of figures 1 and 2 further show a variant in which the mowing machine 1 comprises two main mowing units 2-1, 2-2 which may be fixedly mounted at spaced-apart positions relative to each other. Obstacles 4 can pass the main mowing units in the area between the main mowing units where initially no mowing takes place. Said intermediate area is mowed in part by the at least one pivoting mowing unit 3 while the mowing machine 1 is moving forward, in most cases while pivoting takes place, so that at least part of the mowing range not covered by the at least one main mowing unit 3-1, 3-2 is nevertheless mowed. The respective pivoting mowing units 3-1 and 3-2 each cover their own respective areas A1 and A2, each on one side of passing obstacles 4, around which mowing is to take place. The areas A1 and A2 are adjacent to each other and may overlap in the boundary region between them if, as mentioned before, the arms 5-1, 5-2 are different in length. In this variant, mowing takes place in the boundary region by different mowing units 3 pivoting around the obstacles 4, whilst the area between adjacent obstacles 4 is mowed with a slight overlap by the pivoting mowing units 3.

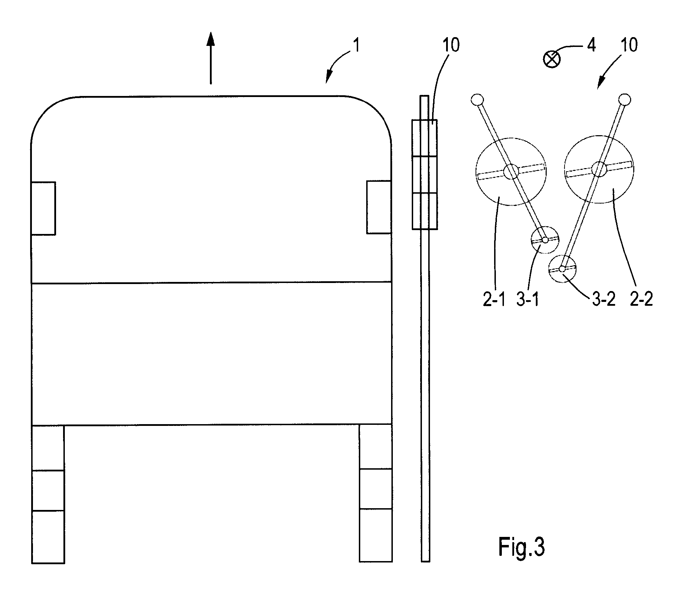

Figure 3 is a very schematic view of an embodiment of the mowing machine 1, in which generally at least the pivoting mowing unit(s) 3, which have a relatively low own weight, are mounted on a frame 10 capable of forward and backward movement parallel to the driving direction on the mowing machine 1. In a possible variant of the embodiment of figure 2, as shown in figure 3, both the pivoting mowing unit(s) 3 and the main mowing unit(s) 2 are mounted on the movable frame 10, which will be slightly more robust in that case. What is achieved by using said frame 10 on the machine 1 that generally moves ahead at a steady speed (for example of about 12 km/h), is that the at least one pivoting mowing unit 3 will mow around the obstacle 4, whilst the aforesaid mowing unit 3, as a result of the frame 10 moving back parallel to the driving direction of the mowing machine 1, moves ahead more slowly (for example at a speed of 5 km/h) than the mowing machine 1. Thus, mowing around the obstacle 4 advantageously takes place at a temporarily lower driving speed. Once the area around said obstacle has been mowed, the frame 10 is moved forward over the mowing machine 1, during which the speed of the frame 10 relative to the ground surface will be higher (for example 15 km/h) than the driving speed of the machine 1.

It will be advantageous to combine the functionality explained in the foregoing with means which furthermore make it possible, for example in those cases where mowing takes place around a road marker post, to wash the surface carrying the kilometre indication, the road number etc at the same time at the aforesaid temporarily lower speed.

## Claims

1. A mobile mowing machine comprising one or more main mowing units and at least one mowing unit disposed behind the main mowing unit, seen in the driving direction, and being pivotable in a horizontal plane.

2. A mowing machine according to claim 1, **characterised in that** the at least one pivoting mowing unit is mounted to one end of an arm which is pivotable about a vertical axis at the other end.

3. A mowing machine according to either one of claims 1-2, **characterised in that** the mowing machine comprises two pivoting mowing units, which are each mounted to respective arms of different length.

4. A mowing machine according to any one of claims 1-3, **characterised in that** the mowing machine comprises two mutually spaced-apart main mowing units, which are arranged in fixed positions relative to each other.

5. A mowing machine according to any one of claims 1-4, **characterised in that** said at least one pivoting mowing unit has a mowing range realised by pivoting and moving ahead, which mowing range comprises at least part of the mowing range that is not covered by said at least one main mowing unit.

6. A mowing machine according to any one of claims 1-5, **characterised in that** the mowing machine comprises two mutually spaced-apart main mowing units and at least one pivoting mowing unit having a mowing range that covers at least the un-mowed area between the main mowing units.

7. A mowing machine according to any one of claims 1-6, **characterised in that** said at least one main mowing unit is embodied as a rotary mowing unit.

8. A mowing machine according to any one of claims 1-7, **characterised in that** at least the pivoting mowing unit(s) is (are) mounted on a frame on the mowing machine which is capable of forward and backward movement parallel to the driving direction.

9. A mowing machine according to any one of claims 1-8, **characterised in that** the main mowing unit(s) and the pivoting mowing unit(s) are jointly mounted on a frame capable of forward and backward movement, parallel to the driving direction, on the mowing machine.

10. A mowing machine according to any one of claims 1-9, **characterised in that** the at least one main mowing unit, which is embodied as a rotary mowing unit, is rotatable about a respective point of rotation, which point of rotation practically coincides with the point of rotation of the pivot pin about which the respective arm of the respective mowing unit pivots.

11. A mowing machine according to any one of claims 1-10, **characterised in that** the at least one pivoting mowing unit is provided with a spring-loaded bellows or roller at the, possibly rotatable outer circumference thereof, or with an elastic material, for example a pneumatic tire.

12. A method wherein mowing is carried out by one or more main mowing units mounted on a mobile mowing machine according to any one of claims 1-11, whilst at least one mowing unit disposed behind the main mowing unit, seen in the driving direction, and being pivotable in a horizontal plane mows at least part of the area not mowed by said at least one main mowing unit while driving ahead, whilst each pivoting mowing unit mows its own area on one side of passing obstacles.

13. A method according to claim 12, **characterised in that,** when two pivoting mowing units are used, said mowing units mow on either side of passing obstacles in the boundary region of their respective mowing ranges.

14. A method according to claim 13, **characterised in that** said two pivoting mowing units, which are each mounted to respective arms being different in length, have overlapping mowing ranges in their boundary region.

15. A method according to any one of claims 12-14, **characterised in that** at least the at least one pivoting mowing unit mows around an obstacle, whilst the aforesaid mowing unit, as a result of being mounted on a frame that moves back over the mowing machine parallel to the driving direction, moves ahead at a speed lower than the driving speed of the mowing machine, at the same time mowing around the obstacle, after which it is moved forward over the mowing machine together with the frame.
